(19) Europäisches Patentamt

European Patent Office

Office européen des brevets

(11) **EP 4 608 046 A1**

(12) **EUROPEAN PATENT APPLICATION**
published in accordance with Art. 153(4) EPC

(43) Date of publication:
**27.08.2025 Bulletin 2025/35**

(21) Application number: **22963044.7**

(22) Date of filing: **26.10.2022**

(51) International Patent Classification (IPC):
***H04W 74/08*** (2024.01)

(52) Cooperative Patent Classification (CPC):
**H04W 74/08**

(86) International application number:
**PCT/CN2022/127723**

(87) International publication number:
**WO 2024/087060 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **DU, Xianfeng
  Shenzhen, Guangdong 518129 (CN)**
• **GAO, Kuandong
  Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD AND COMMUNICATION APPARATUS**

(57)    A communication method is provided, including: A terminal device receives indication information from a network device, where the indication information indicates adjustment information of at least one synchronization signal block SSB; the terminal device selects a first SSB used for random access, where the first SSB is included in the at least one SSB; and the terminal device sends a random access preamble to the network device on a random access occasion RO associated with a second SSB, where the second SSB is determined based on the indication information and first SSB. The RO for sending the random access preamble is adjusted, to avoid a random access failure caused because a random access preamble sent on an RO associated with an SSB used for random access cannot be received by the network device.

FIG. 6

**Description**

**TECHNICAL FIELD**

Embodiments of this application relate to the field of communication technologies, and more specifically, to a communication method and a communication apparatus.

**BACKGROUND**

Random access is a process in which a terminal device accesses a network. The random access process is a process from time when the terminal device sends a random access preamble (preamble) to start attempting to access the network to time before a basic signaling connection is established between the terminal device and the network.
Currently, in the random access process, the terminal device may select, based on a selected synchronization signal block (Synchronization Signal and PBCH block, SSB) and a mapping relationship between the SSB and a random access channel (Random Access Channel, RACH) occasion (RACH occasion, RO), an RO for sending the preamble.
If the terminal device still sends, when a beam squint (Beam squint) phenomenon occurs on a beam on a network device side, the preamble on the selected RO corresponding to the SSB for random access, the network device may fail to receive the preamble. As a result, the terminal device cannot implement random access. Therefore, how to implement random access of the terminal device when a beam squint phenomenon occurs becomes an urgent problem to be resolved.

**SUMMARY**

Embodiments of this application provide a communication method, to implement random access of a terminal device when a transmit beam for sending an SSB and a receive beam corresponding to an RO associated with the SSB are in different directions on a network device side.
According to a first aspect, a communication method is provided. The method may be performed by a terminal device, or may be performed by a component (for example, a chip or a circuit) of a terminal device. This is not limited. For ease of description, the following uses an example in which the method is performed by the terminal device for description.
The communication method includes: A terminal device receives indication information from a network device, where the indication information indicates adjustment information of at least one synchronization signal block SSB; the terminal device selects a first SSB used for random access, where the first SSB is included in the at least one SSB; and the terminal device sends a random access preamble to the network device on a random access occasion RO associated with a second SSB, where the second SSB is determined based on the indication information and the first SSB.
The first SSB selected by the terminal device for random access may be understood as an SSB selected by the terminal device from the plurality of SSBs sent by the network device. Specifically, the terminal device may determine, from the plurality of SSBs based on channel quality, the first SSB used for random access.
Based on the foregoing technical solution, the terminal device does not send the random access preamble on an RO associated with the first SSB used for random access, but sends the random access preamble on the RO associated with the second SSB, and the second SSB is determined based on the first SSB and the indication information delivered by the network device. In this way, the network device can receive the random access preamble sent by the terminal device on the RO associated with the second SSB. It may be understood that, in this technical solution, when determining the RO for sending the random access preamble, the terminal device not only considers the SSB used for random access, but also considers the indication information delivered by the network device, and a purpose of delivering the indication information by the network device is to enable the terminal device to adjust the RO for sending the random access preamble. This avoids a case in which the network device cannot receive the random access preamble sent by the terminal device because the terminal device determines, based only on the SSB used for random access, the RO for sending the random access preamble to send the random access preamble.
For example, when a beam squint occurs on a network device side (for example, a transmit beam used by the network device to send the first SSB and a receive beam corresponding to an RO associated with the first SSB are in different directions), the network device delivers the indication information, so that the terminal device does not send the random access preamble on the RO associated with the first SSB. Instead, the RO for sending the random access preamble is adjusted. In this way, when the beam squint occurs, the network device can still receive the random access preamble sent by the terminal device.
With reference to the first aspect, in some implementations of the first aspect, the method further includes: determining, based on the second SSB and system information, the random access occasion RO corresponding to the second SSB, where the system information indicates a relationship between a candidate synchronization signal block SSB and a candidate RO, and the candidate SSB includes the second SSB.

According to a second aspect, a communication method is provided. The method may be performed by a network device, or may be performed by a component (for example, a chip or a circuit) of a network device. This is not limited. For ease of description, the following uses an example in which the method is performed by the network device for description.

The communication method includes: A network device sends indication information to a terminal device, where the indication information indicates adjustment information of at least one synchronization signal block SSB, and the at least one SSB includes a first SSB; and the network device receives a random access preamble from the terminal device, where the random access preamble is sent on a random access occasion RO associated with a second SSB, the second SSB is determined based on the indication information and the first SSB, and the first SSB is used for random access.

According to a third aspect, a communication apparatus is provided. The apparatus is configured to perform the method according to the first aspect.

The apparatus includes: a receiving unit, configured to receive indication information from a network device, where the indication information indicates adjustment information of at least one synchronization signal block SSB; a processing unit, configured to select a first SSB used for random access, where the first SSB is included in the at least one SSB; and a sending unit, configured to send a random access preamble to the network device on a random access occasion RO associated with a second SSB, where the second SSB is determined based on the indication information and the first SSB.

According to a fourth aspect, a communication apparatus is provided. The apparatus is configured to perform the method according to the second aspect.

The communication apparatus includes: a sending unit, configured to send indication information to a terminal device, where the indication information indicates adjustment information of at least one synchronization signal block SSB, and the at least one SSB includes a first SSB; and a receiving unit, configured to receive a random access preamble from the terminal device, where the random access preamble is sent on a random access occasion RO associated with a second SSB, the second SSB is determined based on the indication information and the first SSB, and the first SSB is used for random access.

With reference to the first aspect to the fourth aspect, in some implementations of the first aspect to the fourth aspect, the indication information indicates an index correction value of each of a plurality of SSBs sent by the network device. The first SSB is one of the plurality of SSBs sent by the network device, and an index correction value of the first SSB and an index of the first SSB are used to determine an index of the second SSB.

Based on the foregoing technical solution, the network device may indicate, by indicating the index correction value corresponding to each SSB, how the terminal device determines the index of the second SSB based on the index of the first SSB used for random access. This technical solution is applicable to a plurality of terminal devices served by the network device. The network device may broadcast the indication information, and each of the plurality of terminal devices served by the network device may determine the second SSB based on the selected first SSB used for random access and the indication information. This solution can simplify an operation of the network device.

With reference to the first aspect to the fourth aspect, in some implementations of the first aspect to the fourth aspect, that an index correction value of the first SSB and an index of the first SSB are used to determine an index of the second SSB includes: A value relationship between a frequency channel number of a frequency band occupied by the first SSB and a frequency channel number of a frequency band occupied by a physical random access channel PRACH resource is used to determine that the index of the first SSB plus or minus the index correction value of the first SSB is the index of the second SSB. The PRACH resource is used to carry the random access preamble.

Based on the foregoing technical solution, a beam squint degree is related to a frequency channel number. Therefore, in a process of determining the index of the second SSB, the value relationship between the frequency channel number of the frequency band occupied by the first SSB and the frequency channel number of the frequency band occupied by the PRACH resource is considered, so that accuracy of the solution can be improved.

With reference to the first aspect to the fourth aspect, in some implementations of the first aspect to the fourth aspect, the indication information indicates an index correction value of an SSB whose index meets a first condition, and the first condition includes at least one of the following: The index is greater than a first threshold, the index is less than a second threshold, or an absolute value of a difference between the index and an index of a reference SSB is greater than a third threshold. The reference SSB is an SSB corresponding to a beam whose beam direction is a normal direction.

Based on the foregoing technical solution, the indication information may indicate an index correction value of an SSB whose index meets a specific condition, for example, may indicate an index correction value of an SSB whose index falls within a specific range. In other words, the index correction value corresponding to each SSB indicated by the indication information may be the index correction value of the SSB whose index meets the specific condition, and an index correction value of an SSB whose index does not meet the condition may be understood as 0. This can reduce signaling overheads of the indication information to a specific extent.

With reference to the first aspect to the fourth aspect, in some implementations of the first aspect to the fourth aspect, the indication information further indicates at least one SSB group, and two SSBs included in the SSB group are associated SSBs.

With reference to the first aspect to the fourth aspect, in some implementations of the first aspect to the fourth aspect, an index correction value of any one of the plurality of SSBs meets the following condition: a value determined based on an index of the any SSB and the index correction value of the any SSB is less than or equal to an index of an SSB with a largest index value, and is greater than or equal to an index of an SSB with a smallest index value.

Based on the foregoing technical solution, in a process in which the terminal device determines the index of the second SSB based on the index of the first SSB and the index correction value of the first SSB, it should be noted that a value determined based on the index of the first SSB and the index correction value of the first SSB should not exceed a limit of index values in the plurality of SSBs sent by the network device, to avoid a case in which the terminal device cannot determine the second SSB.

With reference to the first aspect to the fourth aspect, in some implementations of the first aspect to the fourth aspect, the indication information indicates a difference corresponding to the first SSB in a case of a different frequency difference. The frequency difference is a difference between the frequency channel number of the frequency band occupied by the physical random access channel PRACH resource and the frequency channel number of the frequency band occupied by the first SSB, and the PRACH resource is used to carry the random access preamble.

Based on the foregoing technical solution, the network device may indicate the differences respectively corresponding to the first SSB in the cases of different frequency differences. In other words, the terminal device that selects the first SSB as the SSB for random access may determine the index of the second SSB based on the indication information. Compared with indicating the index correction value corresponding to each SSB, this can reduce signaling overheads of the indication information.

With reference to the first aspect to the fourth aspect, in some implementations of the first aspect to the fourth aspect, a positive or negative value of the frequency difference and a value relationship between the index of the first SSB and the index of the reference SSB are used to determine that the index of the first SSB plus or minus the difference corresponding to the frequency difference is the index of the second SSB. The reference SSB is the SSB corresponding to the beam whose beam direction is the normal direction.

Based on the foregoing technical solution, a beam squint degree is related to a direction of a reference beam. Therefore, the direction of the reference beam is considered in the process of determining the index of the second SSB, so that accuracy of the solution can be improved.

With reference to the first aspect to the fourth aspect, in some implementations of the first aspect to the fourth aspect, the indication information indicates an index difference between the index of the second SSB and the index of the first SSB.

Based on the foregoing technical solution, the network device may directly indicate, by indicating the index difference between the index of the first SSB and the index of the second SSB, the terminal device to determine the second SSB based on the index difference and the index of the first SSB, so that accuracy of the solution is improved.

With reference to the first aspect to the fourth aspect, in some implementations of the first aspect to the fourth aspect, the value relationship between the frequency channel number of the frequency band occupied by the first SSB and the frequency channel number of the frequency band occupied by the PRACH resource and the value relationship between the index of the first SSB and the index of the reference SSB are used to determine that the index of the first SSB plus or minus the index difference is the index of the second SSB. The reference SSB is the SSB corresponding to the beam whose beam direction is the normal direction.

With reference to the first aspect to the fourth aspect, in some implementations of the first aspect to the fourth aspect, the indication information includes a system information block SIB or OSI.

According to a fifth aspect, this application provides a processor, configured to perform the method according to the foregoing aspects.

Operations such as sending and measuring/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable storage medium stores program code used to be executed by a device, and the program code is used to perform the method according to the foregoing aspects.

According to a seventh aspect, a computer program product including instructions is provided. When the computer program product runs on a computer, the computer is enabled to perform the method according to the foregoing aspects.

According to an eighth aspect, a chip is provided. The chip includes a processor and a communication interface, and the processor reads, through the communication interface, instructions stored in a memory, to perform the method according to the foregoing aspects.

Optionally, in an implementation, the chip further includes the memory. The memory stores a computer program or the instructions. The processor is configured to execute the computer program or the instructions stored in the memory.

When the computer program or the instructions are executed, the processor is configured to perform the method according to the foregoing aspects.

According to a ninth aspect, a communication system is provided, including the communication apparatus according to the third aspect and the communication apparatus according to the fourth aspect.

## BRIEF DESCRIPTION OF DRAWINGS

FIG. 1 is a diagram of a communication system 100 to which an embodiment of this application is applicable;
FIG. 2 is a schematic flowchart of a four-step random access process;
FIG. 3 is a schematic flowchart of a two-step random access process;
FIG. 4 is a diagram of implementing a beam gain;
FIG. 5 is a diagram of beam non-reciprocity;
FIG. 6 is a schematic flowchart of a communication method according to an embodiment of this application;
FIG. 7 is a diagram of indication information indicating to adjust an RO according to an embodiment of this application;
FIG. 8 is a diagram of other indication information indicating to adjust an RO according to an embodiment of this application;
FIG. 9 is a diagram of still other indication information indicating to adjust an RO according to an embodiment of this application;
FIG. 10 is a block diagram of a communication apparatus 10 according to an embodiment of this application;
FIG. 11 is a diagram of another communication apparatus 20 according to an embodiment of this application; and
FIG. 12 is a diagram of a chip system 30 according to an embodiment of this application.

## DESCRIPTION OF EMBODIMENTS

The following describes technical solutions in embodiments of this application with reference to the accompanying drawings.

The technical solutions in embodiments of this application are applied to various communication systems, for example, a 5th generation (5th generation, 5G) system or new radio (new radio, NR), a long term evolution (long term evolution, LTE) system, an LTE frequency division duplex (frequency division duplex, FDD) system, and LTE time division duplex (time division duplex, TDD). The technical solutions provided in this application are also applicable to a future communication system, for example, a 6th generation mobile communication system. The technical solutions in embodiments of this application may be further applicable to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

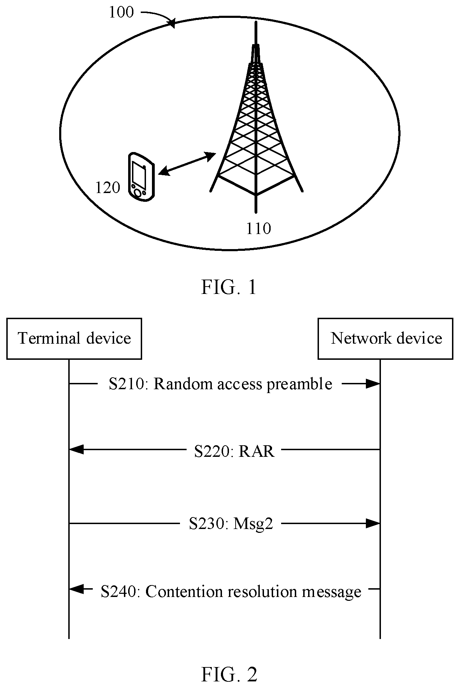

For ease of understanding embodiments of this application, a communication system shown in FIG. 1 is first used as an example to describe in detail a communication system to which an embodiment of this application is applicable. FIG. 1 is a diagram of a communication system 100 to which an embodiment of this application is applicable. As shown in FIG. 1, the communication system 100 may include at least one network device, for example, a network device 110 shown in FIG. 1, and the communication system 100 may further include at least one terminal device, for example, a terminal device 120 shown in FIG. 1. The network device 110 and the terminal device 120 may communicate with each other through a radio link. A plurality of antennas may be disposed for each communication device, for example, the network device 110 or the terminal device 120. For each communication device in the communication system 100, the configured plurality of antennas may include at least one transmit antenna configured to send a signal and at least one receive antenna configured to receive a signal. Therefore, the communication devices in the communication system 100, for example, the network device 110 and the terminal device 120, may communicate with each other by using a multi-antenna technology.

As an example rather than a limitation, the network device and the terminal device in the scenario shown in FIG. 1 may communicate in a plurality of manners. For example, the network device and the terminal device communicate in a point-to-point transmission mode or a multi-hop (namely, relay (relay)) transmission mode. A plurality of network devices communicate with a plurality of terminal devices in a dual-connectivity (dual-connectivity, DC) or multi-connectivity transmission mode. It should be noted that a manner of communication between the network device and the terminal device is not limited in embodiments of this application. For example, transmission between the network device and the terminal device may be on an uplink, a downlink, an access link, a backhaul (backhaul) link, or a sidelink (Sidelink).

The terminal device (terminal equipment) in embodiments of this application may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

As an example rather than a limitation, in embodiments of this application, the wearable device may also be referred to as a wearable intelligent device, and is a general name of a wearable device developed by intelligently designing daily wear by using a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, the terminal device in embodiments of this application may alternatively be a terminal device in an IoT system. An IoT is an important part of future development of information technologies. A main technical feature of the IoT is connecting a thing to a network by using a communication technology, to implement an intelligent network for interconnection between a person and a machine or between one thing and another. In embodiments of this application, the IoT technology can implement massive connections, deep coverage, and terminal power saving by using, for example, a narrowband (narrowband, NB) technology.

The network device in embodiments of this application may be any device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the device may be a gNB or a transmission point (TRP or TP) in a 5G system, for example, an NR system, may be one antenna panel or a group of antenna panels (including a plurality of antenna panels) of a base station in the 5G system, or may be a network node, for example, a baseband unit (BBU) or a distributed unit (distributed unit, DU), included in a gNB or a transmission point.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an entity for performing a method provided in embodiments of this application is not particularly limited in embodiments of this application, provided that a program that records code of the method provided in embodiments of this application can be run to perform communication according to the method provided in embodiments of this application. For example, the entity for performing the method provided in embodiments of this application may be the terminal device or the network device, or may be a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk drive, a floppy disk, or a magnetic tape), an optical disc (for example, a compact disc (compact disc, CD) and a digital versatile disc (digital versatile disc, DVD)), a smart card, and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

It should be understood that FIG. 1 uses communication between the network device and the terminal device as an example to briefly describe a communication scenario to which this application can be applied, and this does not impose a limitation on another scenario to which this application can be applied.

It should be further understood that FIG. 1 is merely a simplified diagram of an example for ease of understanding. The communication system may further include another network device or may further include another terminal device, which is not shown in FIG. 1.

For example, the communication system may further include a core network device configured to manage configurations of the terminal device and the network device, for example, including an access and mobility management function (access and mobility management function, AMF) network element, a session management function (session management function, SMF) network element, a user plane function (user plane function, UPF) network element, and a policy control function (policy control function, PCF) network element.

FIG. 1 shows a communication system to which an embodiment of this application is applicable. To facilitate understanding of the technical solutions in embodiments of this application, some terms or concepts that may be used in embodiments of this application are first briefly described.

1. Random access process

The random access process is a process from time when the terminal device sends a random access preamble (preamble) to start attempting to access the network to time before a basic signaling connection is established between the terminal device and the network.

It should be noted that, before the terminal device selects a random access channel (Random Access Channel, RACH) occasion (RACH occasion, RO) for sending the preamble, the terminal device needs to select an uplink carrier. For example, when a supplementary uplink (supplementary uplink, SUL) or a normal uplink (normal uplink) NUL is configured, the terminal device may choose to operate on the SUL or the NUL.

After selecting the uplink carrier, the terminal device (for example, the terminal device in an RRC connected state) may need to perform a bandwidth part (Bandwidth part, BWP) selection operation. For example, when no RO is configured on an active uplink BWP for the terminal device, the terminal device needs to switch the active uplink BWP to an initial uplink BWP.

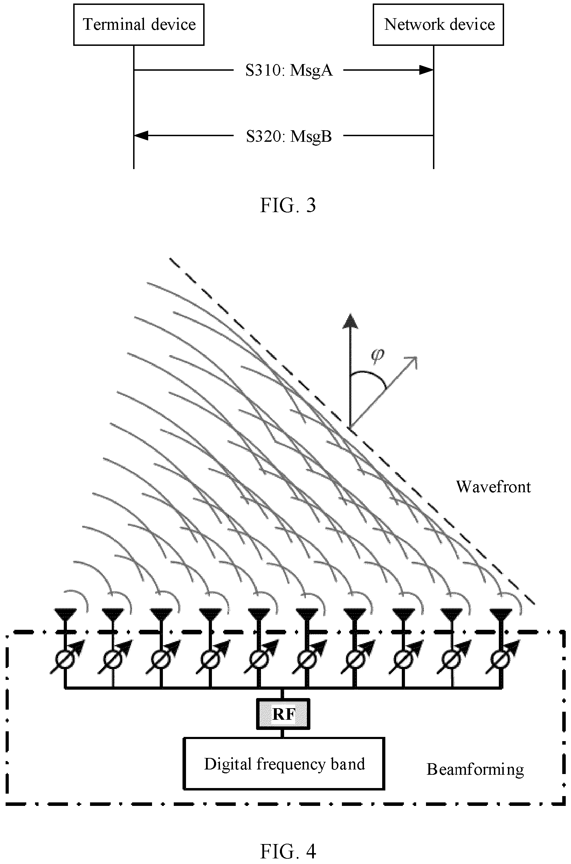

After selecting the uplink carrier or the BWP operation, the terminal device needs to select a random access (random access, RA) type. It may be understood that the terminal device needs to select to perform two-step random access (as shown in FIG. 3, two-step random access is performed, and may also be referred to as non-contention access) or four-step random access (as shown in FIG. 2, four-step random access is performed, and may also be referred to as contention access).

Further, after determining the RA type, the terminal device needs to select a RACH resource. The terminal device may select, based on a selected synchronization signal block (Synchronization Signal and PBCH block, SSB) and a mapping relationship between an SSB and an RO, the RO for sending the preamble. Alternatively, the terminal device may select the to-be-sent preamble based on a selected SSB and a mapping relationship between an SSB and a preamble.

For example, one SSB may correspond to a plurality of ROs, or a plurality of SSBs are mapped to one RO. For another example, one SSB corresponds to one or more preambles, and different SSBs may use different preambles.

Currently, random access is mainly classified into two types: the four-step random access and the two-step random access. For ease of understanding, a four-step random access process and a two-step random access process are separately described with reference to FIG. 2 and FIG. 3.

FIG. 2 is a schematic flowchart of a four-step random access process.

It may be learned from FIG. 2 that the four-step random access process may include the following steps.

S210: A terminal device sends a random access preamble to a network device.

For example, the terminal device sends the random access preamble to the network device on a physical random access channel (physical random access channel, PRACH) resource on a determined RO.

After receiving the random access preamble sent by the terminal device, the network device sends a random access response (random access response, RAR) to the terminal device based on the random access preamble. The random access process shown in FIG. 2 further includes the following steps.

S220: The network device sends the RAR to the terminal device.

For example, the RAR sent by the network device to the terminal device includes indication information indicating an uplink resource for sending a message 3 (message 3, Msg3). It may be understood that after receiving the RAR, the terminal device can learn of the uplink resource for sending the Msg3.

After receiving the RAR, the terminal device sends the Msg3 based on the RAR. The random access process shown in FIG. 2 further includes the following steps.

S230: The terminal device sends the Msg3 to the network device.

For example, the Msg3 may include layer 2 (layer 2, L2) information and/or layer 3 (layer 3, L3) information, for example, an RRC connection setup request message, and for another example, a beam failure recovery (beam failure recovery, BFR) MAC control element (control element, CE).

When the terminal device succeeds in contention resolution, the network device sends a contention resolution message to the terminal device. The random access process shown in FIG. 2 further includes the following steps.

S240: The network device sends the contention resolution message to the terminal device.

For example, the contention resolution message includes an identifier (identifier, ID) of the terminal device, and the contention resolution message may also be referred to as a message 4 (message 4, Msg4). When it is determined, based on the Msg3, that the random access is contention-based random access, information about terminal devices that need to contend is stored. When contention is resolved based on the Msg4, contention resolution is performed on these contending terminal devices.

It should be noted that FIG. 2 in this application is merely a diagram provided for ease of describing the four-step random access process, and does not constitute any limitation on the protection scope of this application. For specific descriptions of the four-step random access process, refer to descriptions in a current related technology.

FIG. 3 is a schematic flowchart of a two-step random access process.

It may be learned from FIG. 3 that the two-step random access process may include the following steps.

S310: A terminal device sends a message A (message A, MsgA) to a network device.

The MsgA includes a preamble part and a physical uplink shared channel (physical uplink shared channel, PUSCH) part. The preamble part is sent on a PRACH resource, and the PUSCH resource may carry L2 or L3 information, for example, a BFR MAC CE or an RRC connection setup request message.

After receiving the message A sent by the terminal device, the network device sends an RAR to the terminal device based on the message A. The random access process shown in FIG. 3 further includes the following step.

S320: The network device sends a message B (message B, MsgB) to the terminal device.

The MsgB may include a success RAR (success RAR) or a fallback RAR (fallback RAR).

When the terminal device receives the fallback RAR, the terminal device needs to fall back to a four-step random access process, to be specific, send a Msg3.

2. Beam squint (Beam squint): The beam squint is a phenomenon in which energy of a broadband signal is not focused in a frequency band range when a large-scale antenna array uses a phase shifter to implement beam steering. Specifically, if it is expected that signal energy sent by a plurality of antennas is focused in a direction, phase compensation may be set by using the phase shifter. However, such phase compensation can be performed only for one frequency (usually a center frequency of a carrier), so that energy of signals at the frequency is superimposed in a specified direction. For signals at a frequency other than this frequency, an energy superposition direction is not the specified direction. Instead, there is a specific offset. This phenomenon is referred to as s beam squint. The beam squint causes signals of different frequency components to converge in different directions.

3. SSB: The SSB includes three parts: a primary synchronization signal (Primary Synchronization Signal, PSS), a secondary synchronization signal (Secondary Synchronization Signal, SSS), and a physical broadcast channel (Physical Broadcast Channel, PBCH). By using the PSS and SSS, UE can obtain information such as timing information, frequency offset information, and a cell ID. Via the PBCH, the UE may obtain a radio frame number, align with an air interface, and schedule some information about a system information block 1 (system information block 1, SIB 1).

4. Beam gain: To overcome a severe propagation loss in high-frequency communication, a communication system usually needs to be equipped with a highly integrated large-scale antenna array to provide a beam gain. For example, phases of different array elements are adjusted, so that energy of a transmitted electromagnetic wave in a specific direction is superimposed in space.

For ease of understanding, how to implement a beam gain by adjusting phases of different array elements is described with reference to FIG. 4.

It may be learned from FIG. 4 that, it is assumed that a plane wave whose departure angle is $\varphi$ needs to be sent, and a spacing between antenna array elements is $d_a$. In this case, a difference between distances from adjacent array elements to the wave plane is $d_a \sin \varphi$, and a phase difference is:

$$\Delta \theta = \frac{2\pi d_a \sin \varphi}{\lambda} = \frac{2\pi d_a f \sin \varphi}{c} \quad \text{(Formula 1-1)}$$

Herein, $c$ represents a speed of light, $f$ is a frequency of a signal, and $\lambda$ is a corresponding wavelength.

5. Beam gain of a narrowband signal: For a narrowband signal, it may be considered that a frequency of sending the signal is a carrier frequency, namely, $f = f_c$ in the foregoing Formula 1-1. When a phase shifter is used to reversely compensate a phase of a transmit signal of an antenna based on $\Delta \theta$, all signals can have a same phase when reaching a wave plane, thereby achieving an objective of energy superposition.

6. Beam gain of a broadband signal: In millimeter-wave/terahertz communication, due to characteristics of low spectral efficiency but abundant spectrum resources, a signal with a large bandwidth usually needs to be transmitted to improve a communication rate. It is assumed that $B$ is a bandwidth of a broadband signal. In this case, a frequency of sending the signal is:

$$f \in \left[ f_c - \frac{B}{2}, f_c + \frac{B}{2} \right] \quad \text{(Formula 1-2)}$$

If each array element sends a signal at a frequency $f$, a phase change in a direction of the departure angle $\varphi$ may be represented by using a normalized vector as follows:

$$\mathbf{a}(\varphi, f) = \frac{1}{\sqrt{N}} \left[ 1, e^{-j\frac{2\pi f d_a \sin \varphi}{c}}, \ldots, e^{-j\frac{(N-1)2\pi f d_a \sin \varphi}{c}} \right]^T . \quad \text{(Formula 1-3)}$$

Herein, $N$ is a quantity of array elements. It may be learned from the foregoing Formula 1-3 that a phase change of a signal sent by each array element in the direction of the departure angle $\varphi$ is related to the frequency $f$, and the phase shifter used for compensation is generally considered to have no frequency selective response (compensating a same phase for signals at all frequencies). During actual engineering, phase compensation is usually set based on the center frequency of the carrier, to offset the phase change of each signal in the direction of the departure angle $\varphi$. Such a normalized phase control coefficient vector is denoted as:

$$\omega(\varphi, f_c) = \frac{1}{\sqrt{N}} \left[ 1, e^{-j\frac{2\pi f_c d_a \sin \varphi}{c}}, \ldots, e^{-j\frac{(N-1)2\pi f_c d_a \sin \varphi}{c}} \right]^T . \quad \text{(Formula 1-4)}$$

The phase shifter is used, and a normalized beam gain of the signal at the frequency of $f$ in the direction of the departure angle $\varphi$ may be represented as follows:

$$A_f(\varphi, f) = \left| \omega(\varphi, f_c)^H \mathbf{a}(\varphi, f) \right|^2 = \left| \frac{1}{N} \sum_{n=1}^{N} e^{-j\left( \frac{2\pi f_c d_a (n-1)}{c} \right) \left( \frac{f}{f_c} \sin \varphi - \sin \varphi \right)} \right|^2 . \quad \text{(Formula 1-5)}$$

A value of $A_f(\varphi, f)$ is the maximum when $\left| \frac{f}{f_c} \sin \varphi - \sin \varphi \right| = 0$, and decreases as a value of $\left| \frac{f}{f_c} \sin \varphi - \sin \varphi \right|$ increases.

The following conclusions can be drawn:

(1) When $\varphi = 0$, for any signal at $f$, the beam gain can be the maximum, that is, $A_f(\varphi,f)=1$.

(2) When $\varphi \neq 0$, only the beam gain of a signal component satisfying $f= f_c$ can be the maximum. For a signal component satisfying $f \neq f_c$, a larger deviation of $f$ from $f_c$ indicates a smaller beam gain. In addition, a departure angle $\varphi \in$ [-90°,90°] closer to $\pm 90°$ indicates a more obvious decrease in the gain of the signal component satisfying $f \neq f_c$. A larger quantity $N$ of array elements indicates a more obvious decrease in the gain of the signal component satisfying $f \neq f_c$.

Therefore, if a large-scale phased array is used to implement a beam gain in a direction satisfying $\varphi \neq 0$, a gain of a signal in a component $f = f_c \pm \dfrac{B}{2}$ gradually decreases as $B$ increases. As a result, an effective frequency bandwidth resource $B$ in a specific direction is limited.

7. Beam reciprocity: The beam reciprocity means that directions of two different beams are the same or slightly different. For example, a difference between the directions is less than a preset threshold. The preset threshold includes but is not limited to values such as 3 dB and 4 dB. The beam reciprocity in this application may be understood as that beam directions of the beam used by the network device to send the SSB and the beam used by the network device to receive the preamble are the same or slightly different.

8. Beam sweeping: When a transceiver device establishes a link, an SSB is used at a physical layer transmit end as a downlink scanning beam to transmit information. A receive end sequentially receives, on each receive beam, SSB information sent by the transmit end through beam sweeping. For N transmit beams and M receive beams, each of the N beams is sent from the transmit end M times, so that each transmit beam is received via the M receive beams, to complete one traversal beam sweeping cycle. Through traversal beam sweeping, a proper beam pair is established between the transmit end and the receive end, and may be used for subsequent data transmission.

The foregoing briefly describes, with reference to FIG. 1, a scenario to which this application is applicable, and describes basic concepts in this application. It may be learned from a random access process in the foregoing basic concepts that an SSB and a mapping relationship between the SSB and a PRACH resource need to be considered during RACH resource selection.

A random access method is as follows: In a beam sweeping procedure, a network device may obtain a beam synchronized with UE, and establish a communication mechanism with the UE via the beam. In addition, the network device groups SSBs, and different SSBs correspond to different PRACH resources. After synchronizing with an SSB, the UE needs to send a preamble on a PRACH resource and an RO corresponding to the SSB, to implement random access.

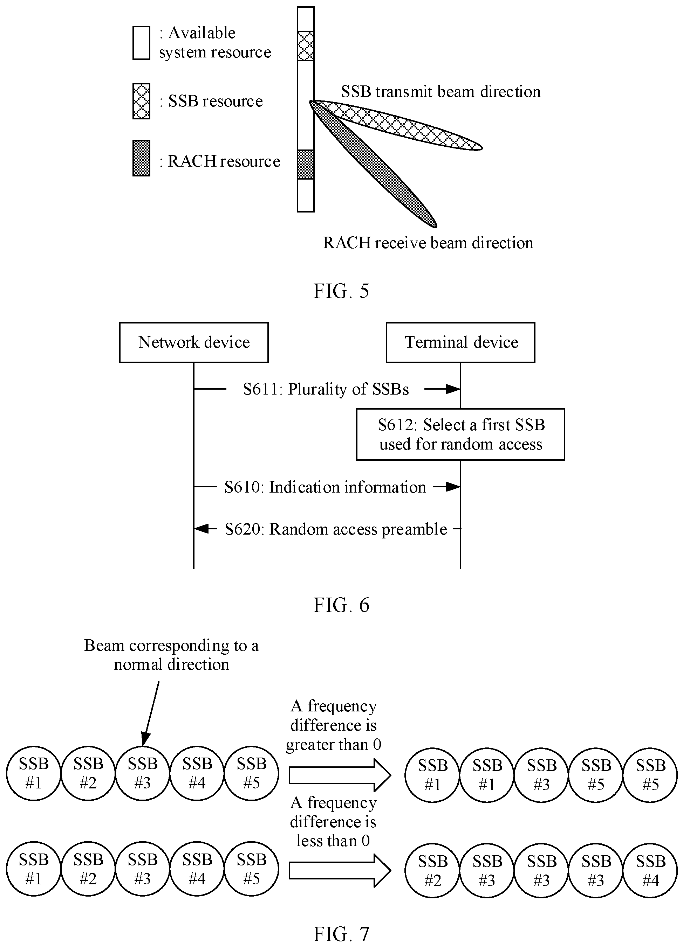

However, in the random access method, a case in which beams are not reciprocal is not considered. When a high-frequency millimeter-wave array has a large scale and a beam is narrow, a beam squint phenomenon may occur on the beam, resulting in beam non-reciprocity. FIG. 5 is a diagram of beam non-reciprocity. It may be learned from FIG. 5 that a direction of a beam used by the network device to send an SSB is different from a direction of a beam used to receive RACH information (for example, a preamble).

In the foregoing case in which the beams are not reciprocal, the network device cannot receive the RACH information, and the UE cannot complete random access.

To avoid a problem that the UE cannot complete access according to the foregoing random access method, this application provides a communication method, to ensure normal access of the UE when a beam squint phenomenon occurs.

A specific structure of an entity for performing the method provided in embodiments of this application is not particularly limited in the following embodiments, provided that a program recording code of the method provided in embodiments of this application can be run to perform communication according to the method provided in embodiments of this application. For example, the entity for performing the method provided in embodiments of this application may be a terminal device or an access network device, or may be a functional module that can invoke and execute the program in the terminal device or the access device.

For ease of understanding of embodiments of this application, the following descriptions are provided.

First, in this application, "indicate" may include a direct indication and an indirect indication. When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

Second, "at least one" in this application means one or more, and "a plurality of" means two or more. In addition, in embodiments of this application, "first", "second", and various numerical numbers (for example, "#1" and "#2") are merely used for differentiation for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "610" and "620" are merely identifiers for ease of description, and do not limit a sequence of performing steps.

Third, in this application, the word "example" or "for example" represents giving an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a relative concept in a specific manner.

Fourth, "stored" in embodiments of this application may mean being stored in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a memory medium in any form. This is not limited in this application.

Fifth, the "protocol" in embodiments of this application may refer to standard protocols in the communication field, for example, may include an LTE protocol, an NR protocol, and a related protocol applied to a future communication system. This is not limited in this application.

Sixth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

Seventh, in embodiments of this application, "of (of)", "corresponding (corresponding, related)", "corresponding (corresponding)", and "associate (associate)" may be interchangeably used sometime. It should be noted that, when a difference between the terms is not emphasized, meanings to be expressed are consistent.

Eighth, in embodiments of this application, "in a case in which", "when", and "if" may be interchangeably used sometimes. It should be noted that, when a difference between the terms is not emphasized, meanings to be expressed are consistent.

Without loss of generality, the following describes in detail the random access method provided in embodiments of this application by using interaction between a network device and a terminal device as an example.

FIG. 6 is a schematic flowchart of a communication method according to an embodiment of this application. The following steps are included.

S611: A network device sends a plurality of SSBs to a terminal device, or a terminal device receives a plurality of SSBs from a network device.

Specifically, in this embodiment, the network device sends the plurality of SSBs to the terminal device via a plurality of beams. Each SSB includes an SSS, a PSS, and a PBCH, and the terminal device may obtain information such as timing information, frequency offset information, and a cell ID via the PSS and the SSS. Via the PBCH, the terminal device may obtain a radio frame number, align with an air interface, and schedule some information about an SIB 1. In addition, the SSB has corresponding identification information (for example, an index and an identifier (identifier, ID)).

Further, in this embodiment, there is a mapping relationship (for example, a first mapping relationship) between an SSB and an RO. It may be understood that the terminal device may determine, based on the first mapping relationship and an SSB, an RO corresponding to the SSB. For example, the first mapping relationship is a relationship between a candidate SSB and a candidate RO. The first mapping relationship is included in system information.

It should be understood that a process in which the network device sends the plurality of SSBs to the terminal device is not described in detail in this embodiment. For details, refer to descriptions of sending the plurality of SSBs by the network device in a current random access-related technology.

Further, the terminal device may select, from the plurality of SSBs sent by the network device, a first SSB used for random access. The method procedure shown in FIG. 6 further includes the following steps.

S612: The terminal device selects the first SSB used for random access.

For example, the network device uses an SSB as a downlink scanning beam to transmit information. The terminal device sequentially receives, on each receive beam, SSB information sent by the network device through beam sweeping. For N transmit beams and M receive beams, each of the N beams is sent from the network device M times, so that each transmit beam is received via the M receive beams, to complete one traversal beam sweeping cycle. Through traversal beam sweeping, a proper beam pair is established between the network device and the terminal device. It may be understood that the network device sends the first SSB to the terminal device via a transmit beam (for example, a first beam) in the beam pair, and the terminal device synchronizes with the first SSB. The first SSB may be understood as an SSB selected by the terminal device for random access.

In addition, it should be noted that each of the plurality of SSBs sent by the network device corresponds to (or is associated with, mapped to, or the like) one or more ROs, and the terminal device may send a preamble on the RO associated with the SSB. In other words, one SSB corresponds to one or more preambles, and different SSBs may correspond to different preambles.

It may be learned from the foregoing description of the basic concepts that, when a millimeter wave is at a high frequency, a terahertz band system bandwidth is large, an array scale is large, and a beam is narrow, a beam squint (beam squint) phenomenon may occur on the beam. As a result, a beam for sending the SSB and a beam for receiving RACH information of the terminal device are not reciprocal. In this case, if the terminal device sends the RACH information (for example, a random access preamble) on an RO corresponding to the first SSB to start an access procedure, the network device may fail to receive the RACH information, and the terminal device may fail to complete synchronous access. For ease of description, the following uses an example in which the RACH information is a random access preamble for description.

In this embodiment, when the beam squint phenomenon occurs, to enable the network device to accurately receive the random access preamble sent by the terminal device, the network device may indicate, by using indication information, the terminal device to adjust the RO for sending the random access preamble. The method procedure shown in FIG. 6 further includes the following steps.

S610: The network device sends the indication information to the terminal device, or the terminal device receives the indication information from the network device.

In a possible implementation, the network device may send SIB information to the terminal device, and include the indication information in the SIB information.

In another possible implementation, the network device may send other system information (Other System Information, OSI) to the terminal device, and include the indication information in the OSI.

Specifically, in this embodiment, the indication information indicates adjustment information of at least one SSB, and the first SSB selected by the terminal device is one of the at least one SSB. The terminal device may adjust, based on the indication information, the RO for sending the random access preamble.

For example, the indication information sent by the network device may be understood as that the network device notifies, by using the indication information, the terminal device that the beam squint occurs. In other words, the network device indicates, by using the indication information, that the transmit beam for sending the first SSB and the receive beam for the RO corresponding to the first SSB are not reciprocal. In other words, the network device indicates, by using the indication information, that there is a deviation between the first SSB used for random access and the SSB used to determine the RO for sending the random access preamble.

In addition, because there is a correspondence between an SSB and a beam, the indication information may also be understood as adjustment information of at least one beam. In other words, the terminal device may adjust, by adjusting the SSB or by adjusting the beam, the RO for sending the random access preamble. For ease of description, an example in which the SSB is adjusted to adjust the RO for sending the preamble is used below for description. If the indication information indicates to adjust the beam, adjustment of the SSB may be adjustment of the beam below. Details are not described again.

Specifically, in this embodiment, that the terminal device does not send the random access preamble on the RO associated with the first SSB, but adjusts, based on the indication information sent by the network device, the RO for sending the random access preamble, and sends the random access preamble to the network device on an adjusted RO may be understood as follows: After triggering random access, the terminal device selects the first SSB based on channel quality, and adjusts the first SSB based on the indication information, to obtain a second SSB. Then, the terminal device determines, based on the second SSB, the RO for sending the random access preamble (for example, the terminal device determines, based on the second SSB and the system information, an RO corresponding to the second SSB, where the system information indicates the relationship between the candidate synchronization signal block SSB and the candidate RO, and the candidate SSB includes the second SSB). The method procedure shown in FIG. 6 further includes the following steps.

S620: The terminal device sends the random access preamble to the network device, or the network device receives the random access preamble from the terminal device.

Specifically, in this embodiment, the terminal device sends the random access preamble to the network device on the random access occasion RO associated with the second SSB. The second SSB is determined based on the indication information and the first SSB.

For example, a difference between a direction of the transmit beam corresponding to the first SSB and a direction of a receive beam corresponding to the RO associated with the second SSB is less than a preset threshold. That the preset threshold is a predefined value (for example, 3 dB) may be understood as that the transmit beam corresponding to the first SSB and the receive beam corresponding to the RO associated with the second SSB coincide best. In this way, the network device can receive the random access preamble sent by the terminal device on the RO associated with the second SSB.

It should be understood that, in this embodiment, the network device can learn that the beam squint phenomenon occurs, and indicate, by using the indication information, the terminal device to adjust the RO for sending the random access preamble. After the terminal device adjusts the RO for sending the random access preamble, the network device may successfully receive the random access preamble on the receive beam corresponding to the transmit beam for sending the first SSB.

Specifically, in this embodiment, the indication information may indicate, in different manners, how to determine the second SSB based on the first SSB. The manners include but are not limited to the following several manners:
Manner 1: The indication information indicates an index correction value corresponding to each of the plurality of SSBs.

The plurality of SSBs are a set of SSBs broadcast by the network device, the set of SSBs includes the first SSB, and an index correction value of the first SSB and an index of the first SSB are used to determine an index of the second SSB.

It should be understood that different frequency bands have different beam squint impact, and a larger deviation of a beam direction from a normal beam direction and/or a larger frequency difference indicate/indicates greater beam squint impact. The frequency difference is a difference between a frequency channel number of a frequency band occupied by the first SSB and a frequency channel number of a frequency band occupied by a physical random access channel PRACH resource, and the PRACH resource is used to carry the random access preamble. In other words, in a process in which the terminal device determines the index of the second SSB based on the index correction value of the first SSB and the index of the first SSB, a degree to which the transmit beam for sending the first SSB deviates from a normal beam and/or the frequency difference may be considered.

For example, a value relationship between the frequency channel number of the frequency band occupied by the first SSB and the frequency channel number of the frequency band occupied by the physical random access channel PRACH resource is used to determine that the index of the first SSB plus or minus the index correction value of the first SSB is the index of the second SSB.

For example, when the frequency channel number of the frequency band occupied by the PRACH resource is greater than the frequency channel number of the frequency band occupied by the first SSB, and the index of the first SSB is greater than an index of an SSB corresponding to the normal beam, the index of the first SSB plus the index correction value of the first SSB is the index of the second SSB.

For another example, when the frequency channel number of the frequency band occupied by the PRACH resource is greater than the frequency channel number of the frequency band occupied by the first SSB, and the index of the first SSB is less than the index of the SSB corresponding to the normal beam, the index of the first SSB minus the index correction value of the first SSB is the index of the second SSB.

For still another example, when the frequency channel number of the frequency band occupied by the PRACH resource is smaller than the frequency channel number of the frequency band occupied by the first SSB, and the index of the first SSB is greater than the index of the SSB corresponding to the normal beam, the index of the first SSB minus the index correction value of the first SSB is the index of the second SSB.

For still another example, when the frequency channel number of the frequency band occupied by the PRACH resource is smaller than the frequency channel number of the frequency band occupied by the first SSB, and the index of the first SSB is less than the index of the SSB corresponding to the normal beam, the index of the first SSB plus the index correction value of the first SSB is the index of the second SSB.

It should be noted that, in a process in which the terminal device determines the index of the second SSB based on the indication information and the index of the first SSB, it needs to be considered that the determined index of the second SSB cannot exceed a limit of an index value. For example, the value determined based on the index of the first SSB and the index correction value corresponding to the first SSB is less than or equal to an index of an SSB with a largest index value, and is greater than or equal to an index of an SSB with a smallest index value.

In addition, it should be noted that, in the foregoing examples, the index correction value corresponding to the SSB indicated by the indication information is an absolute value. Therefore, the terminal device needs to determine, based on the frequency difference and a reference beam direction, whether to add or subtract the index correction value. If the index correction value corresponding to the SSB indicated by the indication information is an actual value (for example, a positive value indicating "plus" or a negative value indicating "minus"), the terminal device may determine the index of the second SSB based on the indication information and the index of the first SSB, without determining whether to add or subtract the index correction value corresponding to the first SSB.

For example, if the indication information indicates that the index correction value corresponding to the first SSB is "-1", the index of the second SSB is the index of the first SSB minus 1. For another example, if the indication information indicates that the index correction value corresponding to the first SSB is "1", the index of the second SSB is the index of the first SSB plus 1.

For ease of understanding, how the terminal device determines the index of the second SSB based on the indication information and the index of the first SSB in Manner 1 is described with reference to a specific example.

Example 1:

The network device indicates, by using the indication information, index correction values respectively corresponding to five SSBs broadcast by the network device. For example, the five SSBs broadcast by the network device are an SSB #1, an SSB #2, an SSB #3, an SSB #4, and an SSB #5. A transmit beam corresponding to the SSB #3 is the beam in the normal direction. It is assumed that an index of the SSB #1 is "1 ", an index of the SSB #2 is "2", an index of the SSB #3 is "3", an index of the SSB #4 is "4", and an index of the SSB #5 is "5". In addition, an RO associated with the SSB #1 is an RO #1, an RO associated with the SSB #2 is an RO #2, an RO associated with the SSB #3 is an RO #3, an RO associated with the SSB #4 is an RO #4, and an RO associated with the SSB #5 is an RO #5. Index correction values respectively corresponding to the SSB #1, the SSB #2, the SSB #3, the SSB #4, and the SSB #5 that are indicated by the network device by using the indication information may be as follows:

The indication information indicates that an index correction value of an SSB whose index value is less than 3 or greater than 3 is 1. It may be understood that an index correction value that is of an SSB and that is not indicated is 0. In Example 1, it may be understood that the network device indicates, by using the indication information, that index correction values corresponding to the SSB #1, the SSB #2, the SSB #4, and the SSB #5 are 1, and an index correction value corresponding to the SSB #3 is 0. Specifically, an adjustment manner corresponding to Example 1 is shown in FIG. 7. The frequency difference is the difference between the frequency channel number of the frequency band occupied by the PRACH resource and the frequency channel number of the frequency band occupied by the SSB used for random access.

In Example 1, if the SSB selected by the terminal device for random access is the SSB #2, before determining the RO, the terminal device needs to determine an index of an SSB' based on the index of the SSB #2 and the index correction value corresponding to the SSB #2. An RO corresponding to the SSB' is the RO for sending the random access preamble.

For example, when the frequency channel number of the frequency band occupied by the PRACH resource is greater than a frequency channel number of a frequency band occupied by the SSB #2, and the index of the SSB #2 is less than the index of the SSB #3, the index of the SSB' obtained by subtracting the index correction value corresponding to the SSB #2 from the index of the SSB #2 is 1. In this case, the terminal device sends the random access preamble on the RO #1 associated with the SSB #1.

For another example, when the frequency channel number of the frequency band occupied by the PRACH resource is smaller than a frequency channel number of a frequency band occupied by the SSB #2, and the index of the SSB #2 is less than the index of the SSB #3, the index of the SSB' obtained by adding the index correction value corresponding to the SSB #2 to the index of the SSB #2 is 3. In this case, the terminal device sends the random access preamble on the RO #3 associated with the SSB #3.

In Example 1, if the SSB selected by the terminal device for random access is the SSB #5, before determining the RO, the terminal device needs to determine an index of an SSB' based on the index of the SSB #5 and the index correction value corresponding to the SSB #5. An RO corresponding to the SSB' is the RO for sending the random access preamble.

For example, when the frequency channel number of the frequency band occupied by the PRACH resource is greater than a frequency channel number of a frequency band occupied by the SSB #5, and the index of the SSB #5 is greater than the index of the SSB #3, the index of the SSB' obtained by adding the index correction value corresponding to the SSB #5 to the index of the SSB #5 is 6. However, it is specified that a value obtained through adjustment cannot exceed a limit. In Example 1, the value cannot be less than 1 or greater than 5. In this case, the terminal device sends the random access preamble on the RO #5 associated with the SSB #5.

For another example, when the frequency channel number of the frequency band occupied by the PRACH resource is smaller than the frequency channel number of the frequency band occupied by the SSB #5, and the index of the SSB #5 is greater than the index of the SSB #3, the index of the SSB' obtained by subtracting the index correction value corresponding to the SSB #5 from the index of the SSB #5 is 4. In this case, the terminal device sends the random access preamble on the RO #4 associated with the SSB #4.

In addition, in Example 1, the terminal device may alternatively select another SSB as the SSB for random access. Examples are not described one by one herein.

It may be understood that the RO finally determined by the terminal device is related to the index of the SSB selected by the terminal device for random access, the index correction value corresponding to the SSB used for random access, a relationship between the beam corresponding to the SSB used for random access and the beam in the normal direction, and the relationship between the frequency channel number of the frequency band occupied by the SSB used for random access and the frequency channel number of the frequency band occupied by the PRACH resource.

For example, in Manner 1, the network device may indicate, by using the indication information, the index correction value corresponding to each SSB according to different indication methods, including but not limited to the following several possible implementations.

In a possible implementation, the indication information indicates an index correction value of an SSB whose index is greater than a first threshold.

For example, the indication information indicates that an index correction value of an SSB whose index is greater than M is #1. For example, an index correction value of an SSB whose index is greater than 10 is 1, and an index correction value that corresponds to an SSB and that is not indicated by the indication information is 0.

In another possible implementation, the indication information indicates an index correction value of an SSB whose index is less than a second threshold.

For example, the indication information indicates that an index correction value of an SSB whose index is less than N is #2. For example, an index correction value of an SSB whose index is less than 5 is 2, and an index correction value that corresponds to an SSB and that is not indicated by the indication information is 0.

In still another possible implementation, the indication information indicates that an absolute value of a difference between an index and an index of a reference SSB is greater than a third threshold. The reference SSB is an SSB corresponding to a beam whose beam direction is the normal direction.

For example, the indication information indicates index correction values of SSBs corresponding to K beams whose beam directions deviate from the normal beam.

For example, the index correction value corresponding to the SSB may be a positive value, a negative value, or 0.

In addition, it may be considered that beam non-reciprocity occurs only when the beam direction deviates from the normal beam direction to a specific extent. For some beams that meet a rule (for example, a difference between an index and the index of the normal beam meets a specific condition), the indication information in the foregoing several implementations may indicate an index correction value corresponding to an SSB whose index meets a specific condition, and indicate an SSB range to which the index correction value is applicable. For example, the indication information indicates that an index correction value corresponding to an SSB whose index is less than 5 or greater than 10 is 1, and an index correction value corresponding to an SSB whose index is between 5 and 10 is 0 (which may be understood as that beam non-reciprocity does not occur between beams 5 to 10 near the normal beam). However, for some SSBs to which this generic value is not applicable, for example, an SSB corresponding to a beam whose beam direction greatly deviates from the normal, the indication information may specifically indicate an index correction value of the SSB, or the indication information may indicate the SSB and an SSB associated with the SSB (for example, the indication information further indicates at least one SSB group, and two SSBs included in the SSB group are associated SSBs). There may be another indication manner of the indication information. Examples are not described one by one herein.

Manner 2: The indication information indicates a difference corresponding to the first SSB in a case of a different frequency difference.

For example, a format of the indication information in Manner 2 is shown in the following Table 1:

| Relationship between frequency difference and difference | | | | |
|---|---|---|---|---|
| Frequency difference | $0 \leq fi < f1$ | $f1 \leq fi < f2$ | $f2 \leq fi < f3$ | $f3 \leq fi < f4$ |
| Difference | 0 | 1 | 2 | 3 |

It should be noted that, in this application, that a correspondence (for example, a correspondence between the frequency difference and the difference corresponding to the frequency difference) indicated by the indication information is represented in a form of table is merely an example, and does not constitute any limitation on the protection scope of this application. The correspondence may alternatively be represented in another manner, for example, the correspondence is represented by using corresponding code. For another example, the correspondence is represented by using a function. Examples are not described herein one by one.

It should be understood that different frequency bands have different beam squint impact, and a larger deviation of a beam direction from a normal beam direction and/or a larger frequency difference indicate/indicates greater beam squint impact. The frequency difference is a difference between a frequency channel number of a frequency band occupied by the first SSB and a frequency channel number of a frequency band occupied by a physical random access channel PRACH resource, and the PRACH resource is used to carry the random access preamble. In other words, in a process in which the terminal device determines the index of the second SSB based on the index correction value of the first SSB and the index of the first SSB, a degree to which the transmit beam for sending the first SSB deviates from a normal beam and/or the frequency difference may be considered.

For example, the value relationship between the frequency channel number of the frequency band occupied by the first SSB and the frequency channel number of the frequency band occupied by the physical random access channel PRACH resource and a value relationship between the index of the first SSB and an index of a reference SSB are used to determine that the index of the first SSB plus or minus the difference corresponding to the frequency difference is the index of the second SSB. The reference SSB is an SSB corresponding to the beam whose beam direction is the normal direction.

For example, when the frequency channel number of the frequency band occupied by the PRACH resource is greater than the frequency channel number of the frequency band occupied by the first SSB, and the index of the first SSB is greater than the index of the SSB corresponding to the normal beam, the index of the first SSB plus the difference corresponding to the frequency difference is the index of the second SSB.

For another example, when the frequency channel number of the frequency band occupied by the PRACH resource is greater than the frequency channel number of the frequency band occupied by the first SSB, and the index of the first SSB is less than the index of the SSB corresponding to the normal beam, the index of the first SSB minus the difference corresponding to the frequency difference is the index of the second SSB.

For still another example, when the frequency channel number of the frequency band occupied by the PRACH resource is smaller than the frequency channel number of the frequency band occupied by the first SSB, and the index of the first SSB is greater than the index of the SSB corresponding to the normal beam, the index of the first SSB minus the difference corresponding to the frequency difference is the index of the second SSB.

For still another example, when the frequency channel number of the frequency band occupied by the PRACH resource is smaller than the frequency channel number of the frequency band occupied by the first SSB, and the index of the first SSB is less than the index of the SSB corresponding to the normal beam, the index of the first SSB plus the difference corresponding to the frequency difference is the index of the second SSB.

It should be noted that, in a process in which the terminal device determines the index of the second SSB based on the indication information and the index of the first SSB, it needs to be considered that the determined index of the second SSB cannot exceed a limit of an index value. For example, the value determined based on the index of the first SSB and the difference corresponding to the frequency difference is less than or equal to an index of an SSB with a largest index value, and is greater than or equal to an index of an SSB with a smallest index value.

In addition, it should be noted that, in the foregoing examples, the difference indicated by the indication information is an absolute value. Therefore, the terminal device needs to determine, based on the frequency difference and a reference beam direction, whether to add or subtract the difference. If the difference indicated by the indication information is an actual value (for example, a positive value indicating "plus" or a negative value indicating "minus"), the terminal device may determine the index of the second SSB based on the indication information and the index of the first SSB, without determining whether to add or subtract the difference corresponding to the frequency difference.

For example, if the indication information indicates that a difference corresponding to a frequency difference #1 is "-1", the terminal device determines that when the frequency difference between the frequency channel number of the frequency band occupied by the PRACH resource and the frequency channel number of the frequency band occupied by the first SSB is the frequency difference #1, the index of the second SSB is the index of the first SSB minus 1. For another example, if the indication information indicates that a difference corresponding to a frequency difference #1 is "1", the terminal device determines that when the frequency difference between the frequency channel number of the frequency band occupied by the PRACH resource and the frequency channel number of the frequency band occupied by the first SSB is the frequency difference #1, the index of the second SSB is the index of the first SSB plus 1.

For ease of understanding, how the terminal device determines the index of the second SSB based on the indication information and the index of the first SSB in Manner 2 is described with reference to a specific example.

Example 2:

Five SSBs broadcast by the network device are an SSB #1, an SSB #2, an SSB #3, an SSB #4, and an SSB #5. A transmit beam corresponding to the SSB #3 is the beam in the normal direction. It is assumed that an index of the SSB #1 is "1", an index of the SSB #2 is "2", an index of the SSB #3 is "3", an index of the SSB #4 is "4", and an index of the SSB #5 is "5". In addition, an RO associated with the SSB #1 is an RO #1, an RO associated with the SSB #2 is an RO #2, an RO associated with the SSB #3 is an RO #3, an RO associated with the SSB #4 is an RO #4, and an RO associated with the SSB #5 is an RO #5.

The network device determines that the SSB selected by the terminal device for random access is the SSB #1, and the network device may indicate, for the SSB #1 by using indication information, differences corresponding to the SSB #1 in cases of different frequency differences.

For example, when the network device indicates different frequency differences by using the indication information, the differences corresponding to the SSB #1 are shown in Table 1. In this case, the terminal device may first determine the corresponding difference based on values of the frequency difference. For example, the terminal device determines that a value of the frequency difference is $f1 \leq fi < f2$. In this case, the difference is 1. Further, after determining the difference, the terminal device may determine, based on a relationship between a beam corresponding to the SSB #1 and the beam in the normal direction (for example, a beam corresponding to the SSB #3), whether to add the difference to or subtract the difference from the index of the SSB #1 to obtain an index of an SSB'. An RO corresponding to the SSB' is the RO for sending the random access preamble.

For example, the index of the SSB #1 is greater than the index of the SSB #3, and the index of the SSB' obtained by adding the difference to the index of the SSB #1 is 2. In this case, the terminal device sends the random access preamble on the RO #2 associated with the SSB #2.

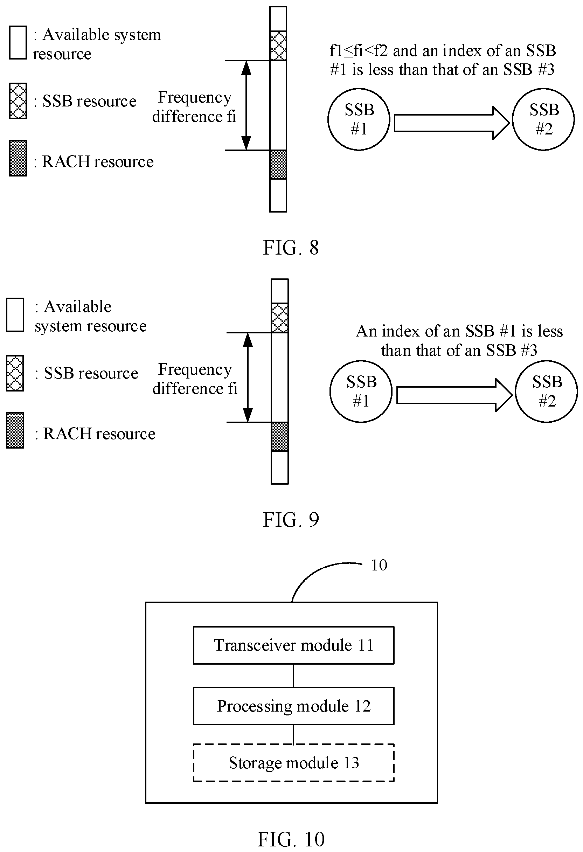

Specifically, an adjustment manner corresponding to Example 2 is shown in FIG. 8. The frequency difference is the difference between the frequency channel number of the frequency band occupied by the PRACH resource and the frequency channel number of the frequency band occupied by the SSB used for random access.

Manner 3: The indication information indicates an index difference between the index of the second SSB and the index of the first SSB.

For example, a format of the indication information in Manner 3 is shown in the following Table 2:

| Index difference | 1 |
|---|---|

It should be understood that different frequency bands have different beam squint impact, and a larger deviation of a beam direction from a normal beam direction and/or a larger frequency difference indicate/indicates greater beam squint impact. The frequency difference is a difference between a frequency channel number of a frequency band occupied by the first SSB and a frequency channel number of a frequency band occupied by a physical random access channel PRACH resource, and the PRACH resource is used to carry the random access preamble. In other words, in a process in which the terminal device determines the index of the second SSB based on the index correction value of the first SSB and the index of the first SSB, a degree to which the transmit beam for sending the first SSB deviates from a normal beam and/or the frequency difference may be considered.

For example, the value relationship between the frequency channel number of the frequency band occupied by the first SSB and the frequency channel number of the frequency band occupied by the physical random access channel PRACH resource and a value relationship between the index of the first SSB and an index of a reference SSB are used to determine that the index of the first SSB plus or minus the index difference is the index of the second SSB. The reference SSB is the SSB corresponding to the beam whose beam direction is the normal direction.

For example, when the frequency channel number of the frequency band occupied by the PRACH resource is greater than the frequency channel number of the frequency band occupied by the first SSB, and the index of the first SSB is greater than the index of the SSB corresponding to the normal beam, the index of the first SSB plus the index difference is the index of the second SSB.

For another example, when the frequency channel number of the frequency band occupied by the PRACH resource is greater than the frequency channel number of the frequency band occupied by the first SSB, and the index of the first SSB is less than the index of the SSB corresponding to the normal beam, the index of the first SSB minus the index difference is the index of the second SSB.

For still another example, when the frequency channel number of the frequency band occupied by the PRACH resource is smaller than the frequency channel number of the frequency band occupied by the first SSB, and the index of the first SSB is greater than the index of the SSB corresponding to the normal beam, the index of the first SSB minus the index difference is the index of the second SSB.

For still another example, when the frequency channel number of the frequency band occupied by the PRACH resource is smaller than the frequency channel number of the frequency band occupied by the first SSB, and the index of the first SSB is less than the index of the SSB corresponding to the normal beam, the index of the first SSB plus the index difference is the index of the second SSB.

It should be noted that, in a process in which the terminal device determines the index of the second SSB based on the indication information and the index of the first SSB, it needs to be considered that the determined index of the second SSB cannot exceed a limit of an index value. For example, the value determined based on the index of the first SSB and the index difference is less than or equal to an index of an SSB with a largest index value, and is greater than or equal to an index of an SSB with a smallest index value.

In addition, it should be noted that, in the foregoing examples, the index difference indicated by the indication information is an absolute value. Therefore, the terminal device needs to determine, based on the frequency difference and a reference beam direction, whether to add or subtract the index difference. If the index difference indicated by the indication information is an actual value (for example, a positive value indicating "plus" or a negative value indicating "minus"), the terminal device may determine the index of the second SSB based on the indication information and the index of the first SSB, without determining whether to add or subtract the index difference.

For example, if the indication information indicates that the index difference is "-1", the index of the second SSB is the index of the first SSB minus 1. For another example, if the indication information indicates that the index difference is "1", the index of the second SSB is the index of the first SSB plus 1.

For ease of understanding, how the terminal device determines the index of the second SSB based on the indication information and the index of the first SSB in Manner 2 is described with reference to a specific example.

Example 3:

Five SSBs broadcast by the network device are an SSB #1, an SSB #2, an SSB #3, an SSB #4, and an SSB #5. A transmit beam corresponding to the SSB #3 is the beam in the normal direction. It is assumed that an index of the SSB #1 is "1", an index of the SSB #2 is "2", an index of the SSB #3 is "3", an index of the SSB #4 is "4", and an index of the SSB #5 is "5". In addition, an RO associated with the SSB #1 is an RO #1, an RO associated with the SSB #2 is an RO #2, an RO associated with the SSB #3 is an RO #3, an RO associated with the SSB #4 is an RO #4, and an RO associated with the SSB #5 is an RO #5.

The network device determines that the SSB selected by the terminal device for random access is the SSB #1, and the network device may indicate the index difference for the SSB #1 by using indication information.

For example, if the network device indicates, by using the indication information, that the index difference corresponding to the SSB #1 is shown in Table 2, the terminal device may determine, based on a relationship between a beam corresponding to the SSB #1 and the beam in the normal direction (for example, a beam corresponding to the SSB #3), whether to add the index difference to or subtract the index difference from the index of the SSB #1 to obtain an index of an SSB'. An RO corresponding to the SSB' is the RO for sending the random access preamble.

For example, the index of the SSB #1 is greater than the index of the SSB #3, and the index of the SSB' obtained by adding the index difference to the index of the SSB #1 is 2. In this case, the terminal device sends the random access preamble on the RO #2 associated with the SSB #2.

Specifically, an adjustment manner corresponding to Example 3 is shown in FIG. 9. The frequency difference is the difference between the frequency channel number of the frequency band occupied by the PRACH resource and the frequency channel number of the frequency band occupied by the SSB used for random access.

Manner 4: The indication information indicates that the second SSB is associated with the first SSB.

In Manner 4, after receiving the indication information, the terminal device sends the random access preamble on the RO associated with the second SSB.

For example, five SSBs broadcast by the network device are an SSB #1, an SSB #2, an SSB #3, an SSB #4, and an SSB #5. A transmit beam corresponding to the SSB #3 is the beam in the normal direction. It is assumed that an RO associated with the SSB #1 is an RO #1, an RO associated with the SSB #2 is an RO #2, an RO associated with the SSB #3 is an RO #3, an RO associated with the SSB #4 is an RO #4, and an RO associated with the SSB #5 is an RO #5.

The network device determines that the SSB selected by the terminal device for random access is the SSB #1, and the network device may indicate, by using indication information, that beams corresponding to the SSB #1 and the SSB #2 are associated beams. In this case, the terminal device may send the random access preamble on the RO #2 associated with the SSB #2.

In the communication method shown in FIG. 6, the terminal device does not send the random access preamble on an RO associated with the first SSB used for random access, but sends the random access preamble on the RO associated with the second SSB, and the second SSB is determined based on the first SSB and the indication information delivered by the network device. In this way, the network device can receive the random access preamble sent by the terminal device on the RO associated with the second SSB.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features. For example, in the embodiment shown in FIG. 6, an example is used to describe the following: The indication information may indicate, in any one of Manner 1 to Manner 4, how to determine the second SSB based on the first SSB. This may be separately implemented, which indicates that the network device may indicate, in any one of the manners, the terminal device to adjust the RO for sending the random access preamble. In addition, any plurality of indication manners in Manner 1 to Manner 4 may be used in combination, or may be understood as a combination of some steps in different embodiments. This is not limited in this application. For example, the network device may send indication information #1 and indication information #2 to the terminal device. The indication information #1 indicates, in an indication manner shown in Manner 1, to adjust the RO for sending the random access preamble. The indication information #2 indicates, in an indication manner shown in Manner 2, to adjust the RO for sending the random access preamble. The terminal device receives the indication information #1 and the indication information #2, and adjusts, in an adjustment manner indicated by the indication information #2, the RO for sending the random access preamble. This may be understood as that a priority of the indication information #1 is lower than a priority of the indication information #2.

For another example, the network device may send indication information #2 and indication information #3 to the terminal device. The indication information #2 indicates, in an adjustment manner shown in Manner 2, to adjust the RO for sending the random access preamble. The indication information #3 indicates, in an adjustment manner shown in Manner 3 or Manner 4, to adjust the RO for sending the random access preamble. The terminal device receives the indication information #2 and the indication information #3, and adjusts, in an adjustment manner indicated by the indication information #3, the RO for sending the random access preamble. This may be understood as that a priority of the indication information #2 is lower than a priority of the indication information #3.

It should be further understood that in some of the foregoing embodiments, a device (for example, the terminal device or the network device) in a conventional network architecture is mainly used as an example for description. It should be understood that a specific form of the device is not limited in embodiments of this application. For example, embodiments of this application are applicable to all future devices that can implement a same function.

It may be understood that, in the foregoing method embodiments, a method and an operation implemented by a device (for example, the terminal device or the network device) may alternatively be implemented by a component (for example, a chip or a circuit) of the device.

The communication method provided in embodiments of this application is described above in detail with reference to FIG. 6 to FIG. 9. The communication method is mainly described from a perspective of interaction between the terminal device and the network device. It may be understood that, to implement the foregoing functions, the terminal device and the network device include corresponding hardware structures and/or software modules for performing the functions.

A person skilled in the art should be able to be aware that, in combination with units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail the terminal device and the network device provided in embodiments of this application with reference to FIG. 10 to FIG. 12. It should be understood that descriptions of apparatus embodiments correspond to the descriptions of the method embodiments. Therefore, for content that is not described in detail, refer to the foregoing method embodiments. For brevity, details of some content are not described herein again.

In embodiments of this application, functional modules may be divided on the terminal device and the network device based on the foregoing method examples. For example, each functional module may be obtained through division based on each function, or two or more functions may be integrated into one processing module. The integrated module may be implemented in a form of hardware, or may be implemented in a form of software functional module. It should be noted that, in embodiments of this application, division into the modules is an example, and is merely logical function division. During actual implementation, another division manner may be used. In the following description, it is assumed that the functional modules are obtained through division in a one-to-one correspondence with the functions.

FIG. 10 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform a sending/receiving-related operation, and the processing module 12 is configured to perform an operation other than sending and receiving. The transceiver module 11 may also be referred to as a communication interface or a communication unit.

Optionally, the apparatus 10 may further include a memory module 13. The memory module 13 may be configured to store instructions and/or data. The processing module 12 may read the instructions and/or the data in the memory module, so that the apparatus implements actions of a device in the foregoing method embodiments.

In a design, the apparatus 10 may correspond to the terminal device in the foregoing method embodiments, or may be a component (for example, a chip) of the terminal device.

The apparatus 10 may implement corresponding steps or procedures performed by the terminal device in the foregoing method embodiments. The transceiver module 11 may be configured to perform receiving and sending-related operations of the terminal device in the foregoing method embodiments. The processing module 12 may be configured to perform a processing-related operation of the terminal device in the foregoing method embodiments.

In a possible implementation, the transceiver module 11 is configured to receive indication information from a network device, where the indication information indicates adjustment information of at least one synchronization signal block SSB. The processing module 12 is configured to select a first SSB used for random access, where the first SSB is included in the at least one SSB. The transceiver module 11 is configured to send a random access preamble to the network device on a random access occasion RO associated with a second SSB, where the second SSB is determined based on the indication information and the first SSB.

When the apparatus 10 is configured to perform the method in FIG. 6, the transceiver module 11 may be configured to perform steps of receiving and sending information in the method, for example, steps S611, S610, and S620. The processing module 12 may be configured to perform a processing step in the method, for example, step S612.

It should be understood that a specific process in which the units perform the foregoing corresponding steps is described in detail in the foregoing method embodiments. For brevity, details are not described herein again.

In another design, the apparatus 10 may correspond to the network device in the foregoing method embodiments, or may be a component (for example, a chip) of the network device.

The apparatus 10 may implement corresponding steps or procedures performed by the network device in the foregoing method embodiments. The transceiver module 11 may be configured to perform receiving and sending-related operations of the network device in the foregoing method embodiments. The processing module 12 may be configured to perform a processing-related operation of the network device in the foregoing method embodiments.

In a possible implementation, the transceiver module 11 is configured to send indication information to a terminal device, where the indication information indicates adjustment information of at least one synchronization signal block SSB, and the at least one SSB includes a first SSB. The transceiver module 11 is configured to receive a random access preamble from the terminal device, where the random access preamble is sent on a random access occasion RO associated with a second SSB, the second SSB is determined based on the indication information and the first SSB, and the first SSB is used for random access.

When the apparatus 10 is configured to perform the method in FIG. 6, the transceiver module 11 may be configured to perform steps of receiving and sending information in the method, for example, steps S611, S610, and S620. The processing module 12 may be configured to perform a processing step in the method.

It should be understood that a specific process in which the units perform the foregoing corresponding steps is described in detail in the foregoing method embodiments. For brevity, details are not described herein again.

It should be further understood that the apparatus 10 herein is embodied in a form of functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art can understand that the apparatus 10 may be specifically the mobility management network element in the foregoing embodiments, and may be configured to perform the processes and/or the steps corresponding to the mobility management network element in the foregoing method embodiments; or the apparatus 10 may be specifically the terminal device in the foregoing embodiments, and may be configured to perform the processes and/or the steps corresponding to the terminal device in the foregoing method embodiments. To avoid repetition, details are not described herein again.

The apparatus 10 in the foregoing solutions has a function of performing corresponding steps performed by devices (for example, the terminal device and the network device) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to separately perform a receiving and sending operation and a related processing operation in each method embodiment.

In addition, the transceiver module 11 may be a transceiver circuit (for example, may include a receiver circuit and a transmitter circuit), and the processing module may be a processing circuit.

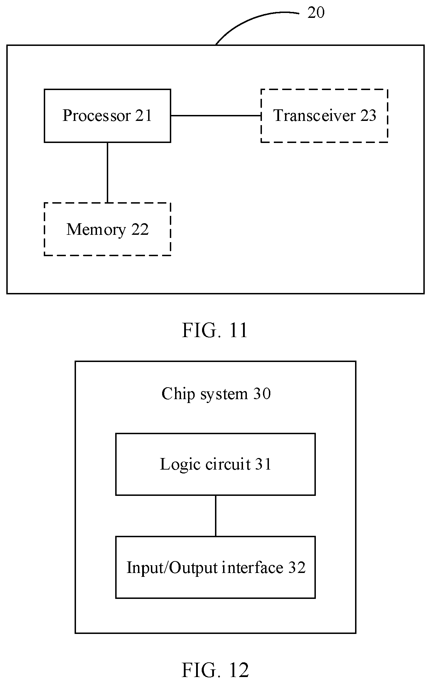

FIG. 11 is a diagram of another communication apparatus 20 according to an embodiment of this application. The apparatus 20 includes a processor 21. The processor 21 is configured to execute a computer program or instructions stored in a memory 22, or read data or signaling stored in the memory 22, to perform the methods in the foregoing method embodiments. Optionally, there are one or more processors 21.

Optionally, as shown in FIG. 11, the apparatus 20 further includes a memory 22, and the memory 22 is configured to store a computer program or instructions and/or data. The memory 22 may be integrated with the processor 21, or may be disposed separately. Optionally, there are one or more memories 22.

Optionally, as shown in FIG. 11, the apparatus 20 further includes a transceiver 23. The transceiver 23 is configured to receive and/or send a signal. For example, the processor 21 is configured to control the transceiver 23 to send and/or receive a signal.

In a solution, the apparatus 20 is configured to implement operations performed by the terminal device and the network device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example rather than a limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a memory module) may be integrated into the processor.

It should further be noted that the memory described herein is intended to include, but is not limited to, these and any other appropriate type of memory.

FIG. 12 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a memory unit, and invoke instructions in the memory unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the terminal device and the network device in the foregoing method embodiments.

For example, the logic circuit 31 is configured to implement processing-related operations performed by the terminal device and the network device in the foregoing method embodiments. The input/output interface 32 is configured to implement sending and/or receiving-related operations performed by the terminal device and the network device in the foregoing method embodiments.

An embodiment of this application further provides a computer-readable storage medium. The computer-readable storage medium stores computer instructions used to implement the methods performed by the terminal device and the network device in the foregoing method embodiments.

An embodiment of this application further provides a computer program product, including instructions. When the instructions are executed by a computer, the methods performed by the terminal device and the network device in the foregoing method embodiments are implemented.

An embodiment of this application further provides a communication system, including the foregoing terminal device and the foregoing network device.

For explanations and beneficial effect of related content of any one of the apparatuses provided above, refer to the corresponding method embodiments provided above. Details are not described herein again.

In the several embodiments provided in this application, it should be understood that the disclosed apparatuses and methods may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of computer program product. The computer program product includes one or more computer instructions. When the computer program instructions are loaded and executed on a computer, all or some of the procedures or functions in embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data memory device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method is applicable to a terminal device, and comprises:

   receiving indication information from a network device, wherein the indication information indicates adjustment information of at least one synchronization signal block SSB;
   selecting a first SSB used for random access, wherein the first SSB is comprised in the at least one SSB; and
   sending a random access preamble to the network device on a random access occasion RO associated with a second SSB, wherein the second SSB is determined based on the indication information and the first SSB.

2. The method according to claim 1, wherein the indication information indicates an index correction value of each of a plurality of SSBs sent by the network device, wherein
   the first SSB is one of the plurality of SSBs sent by the network device, and an index correction value of the first SSB and an index of the first SSB are used to determine an index of the second SSB.

3. The method according to claim 2, wherein that an index correction value of the first SSB and an index of the first SSB are used to determine an index of the second SSB comprises:

   a value relationship between a frequency channel number of a frequency band occupied by the first SSB and a frequency channel number of a frequency band occupied by a physical random access channel PRACH resource is used to determine that the index of the first SSB plus or minus the index correction value of the first SSB is the index of the second SSB, wherein
   the PRACH resource is used to carry the random access preamble.

4. The method according to claim 2 or 3, wherein the indication information indicates an index correction value of an SSB whose index meets a first condition, wherein
   the first condition comprises at least one of the following:

   the index is greater than a first threshold, the index is less than a second threshold, or an absolute value of a difference between the index and an index of a reference SSB is greater than a third threshold; and
   the reference SSB is an SSB corresponding to a beam whose beam direction is a normal direction.

5. The method according to claim 4, wherein the indication information further indicates at least one SSB group, and two SSBs comprised in the SSB group are associated SSBs.

6. The method according to any one of claims 2 to 5, wherein an index correction value of any one of the plurality of SSBs meets the following condition:
   a value determined based on an index of the any SSB and the index correction value of the any SSB is less than or equal to an index of an SSB with a largest index value, and is greater than or equal to an index of an SSB with a smallest index value.

7. The method according to any one of claims 1 to 6, wherein the indication information indicates a difference corresponding to the first SSB in a case of a different frequency difference, wherein
   the frequency difference is a difference between the frequency channel number of the frequency band occupied by the physical random access channel PRACH resource and the frequency channel number of the frequency band occupied by the first SSB, and the PRACH resource is used to carry the random access preamble.

8. The method according to claim 7, wherein the frequency difference and a value relationship between the index of the first SSB and the index of the reference SSB are used to determine that the index of the first SSB plus or minus the difference corresponding to the frequency difference is the index of the second SSB, wherein
the reference SSB is the SSB corresponding to the beam whose beam direction is the normal direction.

9. The method according to any one of claims 1 to 8, wherein the indication information indicates an index difference between the index of the second SSB and the index of the first SSB.

10. The method according to claim 9, wherein the value relationship between the frequency channel number of the frequency band occupied by the first SSB and the frequency channel number of the frequency band occupied by the PRACH resource and the value relationship between the index of the first SSB and the index of the reference SSB are used to determine that the index of the first SSB plus or minus the index difference is the index of the second SSB, wherein
the reference SSB is the SSB corresponding to the beam whose beam direction is the normal direction.

11. The method according to any one of claims 1 to 10, wherein the indication information comprises a system information block SIB or other system information OSI.

12. The method according to any one of claims 1 to 11, wherein the method further comprises:
determining, based on the second SSB and system information, the random access occasion RO corresponding to the second SSB, wherein the system information indicates a relationship between a candidate synchronization signal block SSB and a candidate RO, and the candidate SSB comprises the second SSB.

13. A communication method, wherein the method is applicable to a network device, and comprises:

sending indication information to a terminal device, wherein the indication information indicates adjustment information of at least one synchronization signal block SSB, and the at least one SSB comprises a first SSB; and
receiving a random access preamble from the terminal device, wherein
the random access preamble is sent on a random access occasion RO associated with a second SSB, the second SSB is determined based on the indication information and the first SSB, and the first SSB is used for random access.

14. The method according to claim 13, wherein the indication information indicates an index correction value of each of a plurality of SSBs sent by the network device, wherein
the first SSB is one of the plurality of SSBs sent by the network device, and an index correction value of the first SSB and an index of the first SSB are used to determine an index of the second SSB.

15. The method according to claim 14, wherein that an index correction value of the first SSB and an index of the first SSB are used to determine an index of the second SSB comprises:

a value relationship between a frequency channel number of a frequency band occupied by the first SSB and a frequency channel number of a frequency band occupied by a physical random access channel PRACH resource is used to determine that the index of the first SSB plus or minus the index correction value of the first SSB is the index of the second SSB, wherein
the PRACH resource is used to carry the random access preamble.

16. The method according to claim 13 or 14, wherein the indication information indicates an index correction value of an SSB whose index meets a first condition, wherein
the first condition comprises at least one of the following:

the index is greater than a first threshold, the index is less than a second threshold, or an absolute value of a difference between the index and an index of a reference SSB is greater than a third threshold; and
the reference SSB is an SSB corresponding to a beam whose beam direction is a normal direction.

17. The method according to claim 16, wherein the indication information further indicates at least one SSB group, and two SSBs comprised in the SSB group are associated SSBs.

18. The method according to any one of claims 14 to 17, wherein an index correction value of any one of the plurality of SSBs meets the following condition:
a value determined based on an index of the any SSB and the index correction value of the any SSB is less than or equal to an index of an SSB with a largest index value, and is greater than or equal to an index of an SSB with a smallest index value.

19. The method according to any one of claims 13 to 18, wherein the indication information indicates a difference corresponding to the first SSB in a case of a different frequency difference, wherein
the frequency difference is a difference between the frequency channel number of the frequency band occupied by the physical random access channel PRACH resource and the frequency channel number of the frequency band occupied by the first SSB, and the PRACH resource is used to carry the random access preamble.

20. The method according to claim 19, wherein the frequency difference and a value relationship between the index of the first SSB and the index of the reference SSB are used to determine that the index of the first SSB plus or minus the difference corresponding to the frequency difference is the index of the second SSB, wherein
the reference SSB is the SSB corresponding to the beam whose beam direction is the normal direction.

21. The method according to any one of claims 13 to 20, wherein the indication information indicates an index difference between the index of the second SSB and the index of the first SSB.

22. The method according to claim 21, wherein the value relationship between the frequency channel number of the frequency band occupied by the first SSB and the frequency channel number of the frequency band occupied by the PRACH resource and the value relationship between the index of the first SSB and the index of the reference SSB are used to determine that the index of the first SSB plus or minus the index difference is the index of the second SSB, wherein
the reference SSB is the SSB corresponding to the beam whose beam direction is the normal direction.

23. The method according to any one of claims 13 to 22, wherein the indication information comprises a system information block SIB or other system information OSI.

24. A communication apparatus, comprising:

a receiving unit, configured to receive indication information from a network device, wherein the indication information indicates adjustment information of at least one synchronization signal block SSB;
a processing unit, configured to select a first SSB used for random access, wherein the first SSB is comprised in the at least one SSB; and
a sending unit, configured to send a random access preamble to the network device on a random access occasion RO associated with a second SSB, wherein the second SSB is determined based on the indication information and the first SSB.

25. The apparatus according to claim 24, wherein the indication information indicates an index correction value of each of the plurality of SSBs sent by the network device, wherein
the first SSB is one of the plurality of SSBs sent by the network device, and an index correction value of the first SSB and an index of the first SSB are used to determine an index of the second SSB.

26. The apparatus according to claim 25, wherein that an index correction value of the first SSB and an index of the first SSB are used to determine an index of the second SSB comprises:

a value relationship between a frequency channel number of a frequency band occupied by the first SSB and a frequency channel number of a frequency band occupied by a physical random access channel PRACH resource is used to determine that the index of the first SSB plus or minus the index correction value of the first SSB is the index of the second SSB, wherein
the PRACH resource is used to carry the random access preamble.

27. The apparatus according to claim 25 or 26, wherein the indication information indicates an index correction value of an SSB whose index meets a first condition, wherein
the first condition comprises at least one of the following:

the index is greater than a first threshold, the index is less than a second threshold, or an absolute value of a difference between the index and an index of a reference SSB is greater than a third threshold; and
the reference SSB is an SSB corresponding to a beam whose beam direction is a normal direction.

28. The apparatus according to claim 27, wherein the indication information further indicates at least one SSB group, and two SSBs comprised in the SSB group are associated SSBs.

29. The apparatus according to any one of claims 25 to 28, wherein an index correction value of any one of the plurality of SSBs meets the following condition:
a value determined based on an index of the any SSB and the index correction value of the any SSB is less than or equal to an index of an SSB with a largest index value, and is greater than or equal to an index of an SSB with a smallest index value.

30. The apparatus according to any one of claims 24 to 29, wherein the indication information indicates a difference corresponding to the first SSB in a case of a different frequency difference, wherein
the frequency difference is a difference between the frequency channel number of the frequency band occupied by the physical random access channel PRACH resource and the frequency channel number of the frequency band occupied by the first SSB, and the PRACH resource is used to carry the random access preamble.

31. The apparatus according to claim 30, wherein the frequency difference and a value relationship between the index of the first SSB and the index of the reference SSB are used to determine that the index of the first SSB plus or minus the difference corresponding to the frequency difference is the index of the second SSB, wherein
the reference SSB is the SSB corresponding to the beam whose beam direction is the normal direction.

32. The apparatus according to any one of claims 24 to 31, wherein the indication information indicates an index difference between the index of the second SSB and the index of the first SSB.

33. The apparatus according to claim 32, wherein the value relationship between the frequency channel number of the frequency band occupied by the first SSB and the frequency channel number of the frequency band occupied by the PRACH resource and the value relationship between the index of the first SSB and the index of the reference SSB are used to determine that the index of the first SSB plus or minus the index difference is the index of the second SSB, wherein
the reference SSB is the SSB corresponding to the beam whose beam direction is the normal direction.

34. The apparatus according to any one of claims 24 to 33, wherein the indication information comprises a system information block SIB or other system information OSI.

35. The apparatus according to any one of claims 24 to 34, wherein the processing unit is further configured to determine, based on the second SSB and system information, the random access occasion RO corresponding to the second SSB, wherein the system information indicates a relationship between a candidate synchronization signal block SSB and a candidate RO, and the candidate SSB comprises the second SSB.

36. A communication apparatus, comprising:

a sending unit, configured to send indication information to a terminal device, wherein the indication information indicates adjustment information of at least one synchronization signal block SSB, and the at least one SSB comprises a first SSB; and
a receiving unit, configured to receive a random access preamble from the terminal device, wherein
the random access preamble is sent on a random access occasion RO associated with a second SSB, the second SSB is determined based on the indication information and the first SSB, and the first SSB is used for random access.

37. The apparatus according to claim 36, wherein the indication information indicates an index correction value of each of a plurality of SSBs sent by the network device, wherein
the first SSB is one of the plurality of SSBs sent by the network device, and an index correction value of the first SSB and an index of the first SSB are used to determine an index of the second SSB.

38. The apparatus according to claim 37, wherein that an index correction value of the first SSB and an index of the first SSB are used to determine an index of the second SSB comprises:

a value relationship between a frequency channel number of a frequency band occupied by the first SSB and a frequency channel number of a frequency band occupied by a physical random access channel PRACH resource is used to determine that the index of the first SSB plus or minus the index correction value of the first SSB is the index of the second SSB, wherein
the PRACH resource is used to carry the random access preamble.

39. The apparatus according to claim 37 or 38, wherein the indication information indicates an index correction value of an SSB whose index meets a first condition, wherein
the first condition comprises at least one of the following:

the index is greater than a first threshold, the index is less than a second threshold, or an absolute value of a difference between the index and an index of a reference SSB is greater than a third threshold; and
the reference SSB is an SSB corresponding to a beam whose beam direction is a normal direction.

40. The apparatus according to claim 39, wherein the indication information further indicates at least one SSB group, and two SSBs comprised in the SSB group are associated SSBs.

41. The apparatus according to any one of claims 37 to 40, wherein an index correction value of any one of the plurality of SSBs meets the following condition:
a value determined based on an index of the any SSB and the index correction value of the any SSB is less than or equal to an index of an SSB with a largest index value, and is greater than or equal to an index of an SSB with a smallest index value.

42. The apparatus according to any one of claims 36 to 41, wherein the indication information indicates a difference corresponding to the first SSB in a case of a different frequency difference, wherein
the frequency difference is a difference between the frequency channel number of the frequency band occupied by the physical random access channel PRACH resource and the frequency channel number of the frequency band occupied by the first SSB, and the PRACH resource is used to carry the random access preamble.

43. The apparatus according to claim 42, wherein the frequency difference and a value relationship between the index of the first SSB and the index of the reference SSB are used to determine that the index of the first SSB plus or minus the difference corresponding to the frequency difference is the index of the second SSB, wherein
the reference SSB is the SSB corresponding to the beam whose beam direction is the normal direction.

44. The apparatus according to any one of claims 36 to 43, wherein the indication information indicates an index difference between the index of the second SSB and the index of the first SSB.

45. The apparatus according to claim 44, wherein the value relationship between the frequency channel number of the frequency band occupied by the first SSB and the frequency channel number of the frequency band occupied by the PRACH resource and the value relationship between the index of the first SSB and the index of the reference SSB are used to determine that the index of the first SSB plus or minus the index difference is the index of the second SSB, wherein
the reference SSB is the SSB corresponding to the beam whose beam direction is the normal direction.

46. The apparatus according to any one of claims 36 to 45, wherein the indication information comprises a system information block SIB or other system information OSI.

47. A computer-readable storage medium, wherein the computer-readable storage medium stores computer instructions, and when the computer instructions are run on a communication device, the communication device is enabled to perform the method according to any one of claims 1 to 12.

48. A computer-readable storage medium, wherein the computer-readable storage medium stores computer instructions, and when the computer instructions are run on a communication device, the communication device is enabled to perform the method according to any one of claims 13 to 23.

49. A computer program product, comprising instructions, wherein when the computer instructions are run on a communication device, the communication device is enabled to perform the method according to any one of claims 1 to 12.

50. A computer program product, comprising instructions, wherein when the computer instructions are run on a communication device, the communication device is enabled to perform the method according to any one of claims 13 to 23.

51. A chip, wherein the chip is installed in a communication device, the chip comprises a processor and a communication interface, and when the processor reads instructions through the communication interface and runs the instructions, the communication device is enabled to perform the method according to any one of claims 1 to 12.

52. A chip, wherein the chip is installed in a communication device, the chip comprises a processor and a communication interface, and when the processor reads instructions through the communication interface and runs the instruction, the communication device is enabled to perform the method according to any one of claims 13 to 23.

FIG. 1

FIG. 2

Terminal device

Network device

S310: MsgA

S320: MsgB

FIG. 3

$\varphi$

Wavefront

RF

Digital frequency band

Beamforming

FIG. 4

□ : Available
system resource

▨ : SSB resource

▨ : RACH resource

SSB transmit beam direction

RACH receive beam direction

FIG. 5

Network device

Terminal device

S611: Plurality of SSBs →

S612: Select a first SSB
used for random access

S610: Indication information →

← S620: Random access preamble

FIG. 6

Beam corresponding to a
normal direction

A frequency
difference is
greater than 0

A frequency
difference is
less than 0

| SSB #1 | SSB #2 | SSB #3 | SSB #4 | SSB #5 |

| SSB #1 | SSB #1 | SSB #3 | SSB #5 | SSB #5 |

| SSB #1 | SSB #2 | SSB #3 | SSB #4 | SSB #5 |

| SSB #2 | SSB #3 | SSB #3 | SSB #3 | SSB #4 |

FIG. 7

☐ : Available system resource

⊠ : SSB resource

▨ : RACH resource

Frequency difference fi

f1≤fi<f2 and an index of an SSB #1 is less than that of an SSB #3

SSB #1 → SSB #2

FIG. 8

☐ : Available system resource

⊠ : SSB resource

▨ : RACH resource

Frequency difference fi

An index of an SSB #1 is less than that of an SSB #3

SSB #1 → SSB #2

FIG. 9

10

Transceiver module 11

Processing module 12

Storage module 13

FIG. 10

FIG. 11

FIG. 12

## INTERNATIONAL SEARCH REPORT

| International application No. |
|---|
| **PCT/CN2022/127723** |

| A. | CLASSIFICATION OF SUBJECT MATTER |
|---|---|

H04W74/08(2009.01)i

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT, ENTXT, 3GPP: 随机接入, 波束, 斜视, 同步信号块, 时机, 调整, 修正, 索引, 阈值, RACH, beam, squint, SSB, RO, adjust, index, threshold

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 2021329691 A1 (QUALCOMM INC.) 2021-10-21 (2021-10-21) description, paragraphs [0005]-[0015] | 1-52 |
| A | CN 110167164 A (HUAWEI TECHNOLOGIES CO., LTD.) 2019-08-23 (2019-08-23) entire document | 1-52 |
| A | CN 115053618 A (NTT DOCOMO INC.) 2022-09-13 (2022-09-13) entire document | 1-52 |
| A | US 2020053772 A1 (IDAC HOLDINGS, INC.) 2020-02-13 (2020-02-13) entire document | 1-52 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 April 2023** | **18 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2022/127723**

| Patent document cited in search report | | | Publication date (day/month/year) | Patent family member(s) | | | Publication date (day/month/year) |
|---|---|---|---|---|---|---|---|
| US | 2021329691 | A1 | 21 October 2021 | WO | 2021211958 | A1 | 21 October 2021 |
| | | | | TW | 202143783 | A | 16 November 2021 |
| | | | | IN | 202247046974 | A | 16 September 2022 |
| | | | | CN | 115399056 | A | 25 November 2022 |
| CN | 110167164 | A | 23 August 2019 | EP | 3742848 | A1 | 25 November 2020 |
| | | | | WO | 2019158099 | A1 | 22 August 2019 |
| | | | | US | 2021084687 | A1 | 18 March 2021 |
| | | | | CA | 3091093 | A1 | 22 August 2019 |
| | | | | KR | 20200116510 | A | 12 October 2020 |
| | | | | IN | 202047035128 | A | 18 September 2020 |
| | | | | VN | 74427 | A | 25 November 2020 |
| CN | 115053618 | A | 13 September 2022 | WO | 2021161485 | A1 | 19 August 2021 |
| | | | | EP | 4106428 | A1 | 21 December 2022 |
| | | | | JP | 2021161485 | A1 | 30 September 2022 |
| US | 2020053772 | A1 | 13 February 2020 | | None | | |

Form PCT/ISA/210 (patent family annex) (July 2022)